# EUROPEAN PATENT SPECIFICATION

(11) **EP 3 181 846 B1**
(45) Date of publication and mention of the grant of the patent: **18.09.2019**
(21) Application number: 15832569.6
(22) Date of filing: 07.08.2015
(51) Int. Cl.: B01J 37/02, B01J 23/50, B01D 53/94, B01J 29/068, B01J 29/70, B01J 29/85, F01N 3/08, F01N 3/021, F01N 3/20, F01N 3/24, F01N 3/28

(54) **EXHAUST PURIFICATION DEVICE**
ABGASREINIGUNGSVORRICHTUNG
DISPOSITIF DE PURIFICATION DE GAZ D'ÉCHAPPEMENT

(30) Priority: 12.08.2014 JP 2014164171
(43) Date of publication of application: 21.06.2017
(73) Proprietor: HINO MOTORS, LTD., Hino-shi, Tokyo 191-8660 (JP)
(72) Inventor: SATO, Shinya, Hino-shi Tokyo 191-8660 (JP); HIRABAYASHI, Hiroshi, Hino-shi Tokyo 191-8660 (JP)
(74) Representative: Kuhnen & Wacker Patent- und Rechtsanwaltsbüro PartG mbB
(86) International application number: PCT/JP2015/072464
(87) International publication number: WO 2016/024535

(56) References cited:
- EP-A1- 1 685 891
- EP-A1- 2 048 333
- EP-A1- 2 172 268
- JP-A- H06 298 676
- JP-A- H06 298 676
- JP-A- H07 289 896
- JP-A- H09 249 414
- JP-A- 2007 520 327
- JP-A- 2008 031 970
- JP-A- 2010 144 565
- JP-A- 2010 144 565
- JP-A- 2013 139 718
- JP-A- 2013 503 284
- US-A1- 2006 010 859
- US-A1- 2010 204 036
- US-A1- 2012 148 464
- Ramesh Ch Deka ET AL: "ChemInform Abstract: Acidity in Zeolites and Their Characterization by Different Spectroscopic Methods", ChemInform, 21 December 1999 (1999-12-21), pages no-no, XP055548576, DOI: 10.1002/chin.199951241 Retrieved from the Internet: URL:http://nopr.niscair.res.in/bitstream/1 23456789/30826/1/IJCT%205%283%29%20109-123 .pdf [retrieved on 2019-01-28]
- Aurora J. Cruz-Cabeza ET AL: "Metal-Exchanged [beta] Zeolites as Catalysts for the Conversion of Acetone to Hydrocarbons", Materials, vol. 5, no. 12, 5 January 2012 (2012-01-05), pages 121-134, XP055555735, DOI: 10.3390/ma5010121
- Panagiotis G. Smirniotis ET AL: "Comparison between Zeolite beta and gamma-Al2O3 supported Pt for reforming reactions", Journal of Catalysis 1993, 31 December 1993 (1993-12-31), pages 1-17, XP055555743, Retrieved from the Internet: URL:https://www.sciencedirect.com/science/ article/pii/S0021951783711036 [retrieved on 2019-02-12]

## Description

### TECHNICAL FIELD

The technique of the present disclosure relates to an exhaust purification device for decreasing the amount of nitrogen oxides contained in exhaust gas.

### BACKGROUND ART

An exhaust purification device for decreasing the amount of nitrogen oxides contained in exhaust gas is mounted on the exhaust passage of a vehicle. For example, as disclosed in Patent Document 1, an exhaust purification device includes a reduction catalyst that contains silver, and the reduction catalyst promotes a reaction between hydrocarbons and nitrogen oxides so that the exhaust purification device decreases the amount of nitrogen oxides contained in exhaust gas. Further exhaust purification devices are known from Patent Documents 2, 3, and 4.

### PRIOR ART DOCUMENT

### PATENT DOCUMENT

Patent Document 1: Japanese National Phase Laid-Open Publication No. 2009-516125
Patent Document 2: US 2010/0204036 A1
Patent Document 3: EP 2 048 333 A1
Patent Document 4: EP 2 172 268 A1

### SUMMARY OF THE INVENTION

### Problem that the Invention is to solve

Exhaust gas that flows to the reduction catalyst generally includes sulfur oxides in addition to nitrogen oxides. The sulfur oxides contained in the exhaust gas react with silver contained in the reduction catalyst to produce compounds containing silver and sulfur in the reduction catalyst. This impairs a function of the reduction catalyst with which a reaction between hydrocarbons and nitrogen oxides is promoted, so that decrease in the amount of nitrogen oxides contained in exhaust gas is declined.

Accordingly, an objective of the technique of the present disclosure is to provide an exhaust purification device that limits decline of the decrease of the amount of nitrogen oxides contained in exhaust gas.

### Means for Solving the Problems

The object of the invention is solved by the exhaust purification device as defined in claim 1. Advantageous embodiments of the inventive exhaust purification device are subject-matter of the dependent claims.
The inventive exhaust purification device includes a reduction catalyst that is located in a portion of an exhaust passage and is configured to reduce nitrogen oxide contained in exhaust gas. The exhaust purification device further includes a heating portion that is located upstream of the reduction catalyst in a flowing direction of the exhaust gas and configured to heat the exhaust gas. The heating portion is a filter that captures particulates in the exhaust gas. The exhaust purification device further includes a catalyst adding valve that is arranged between the filter and the reduction catalyst in the flow direction and is configured to spray diesel fuel toward the exhaust gas, The reduction catalyst includes a catalyst layer and an adsorption layer, which covers the catalyst layer and forms a surface of the reduction catalyst that is configured to contact the exhaust gas. The catalyst layer includes silver and a catalyst support that supports the silver. The catalyst support is one of alumina and zeolites. The catalyst layer is configured to promote a reduction reaction in which the nitrogen oxide reacts with hydrocarbon to produce ammonia. The adsorption layer includes solid acid metal oxide having acidity. The solid acid metal oxide has at least one of a Bronsted acid site, which is an acid site to donate a proton, and a Lewis acid site, which is an acid site to accept an electron pair, wherein an amount of the acid sites of the adsorption layer is greater than an amount of the acid sites of the catalyst layer. The adsorption layer is configured to adsorb ammonia produced in the catalyst layer. The adsorption layer has a property of causing sulfur oxides contained in the exhaust gas to contact the adsorbed ammonia, thereby is configured to produce ammonium sulfate through a reaction of the adsorbed ammonia with sulfur trioxide or sulfur tetroxide contained in the exhaust gas. The heating portion is configured to increase the temperature of the exhaust gas to a predetermined temperature which is greater than or equal to a temperature at which the ammonium sulfate thermally decomposes, thereby is configured to produce sulfur dioxide that has less reactivity to the silver than the sulfur trioxide or the sulfur tetroxide has. The exhaust purification device is configured to spray fuel from a filter adding valve to exhaust gas when the amount of sulfur oxides contained in the exhaust gas is estimated from the operation state of the engine and the estimated amount of sulfur oxides is greater than a predetermined amount. The catalyst adding valve is configured to also spray fuel at the same time.

### BRIEF DESCRIPTION OF THE DRAWINGS

Fig. 1 is a schematic diagram of an exhaust purification device according to one embodiment with an engine in which the exhaust purification device is installed.
Fig. 2 is a cross-sectional view illustrating the cross-sectional structure of a reduction catalyst.
Fig. 3 is a cross-sectional view taken along line 3-3 of Fig. 2, illustrating one part of a cross-sectional structure of the reduction catalyst.
Fig. 4 is a diagram for illustrating operation of the exhaust purification device.
Fig. 5 is a diagram for illustrating the operation of the exhaust purification device.
Fig. 6 is a diagram for illustrating the operation of the exhaust purification device.
Fig. 7 is a diagram for illustrating the operation of the exhaust purification device.

### MODES FOR CARRYING OUT THE INVENTION

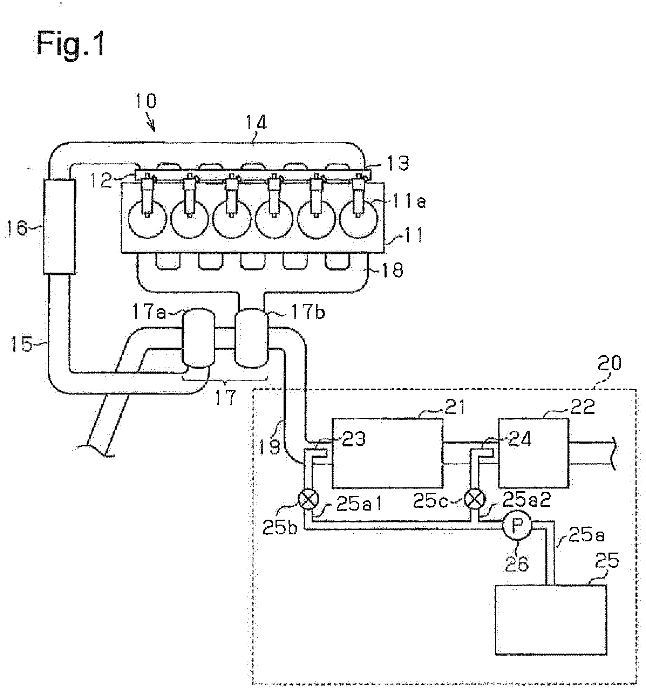

With reference to Figs. 1 to 7, an exhaust purification device according to one embodiment will now be described. In the following, the schematic structure of the engine in which the exhaust purification device is installed, the structure of a reduction catalyst included in the exhaust purification device, and operation of the exhaust purification device will be described in this order.

### [Schematic Structure of Engine]

With reference to Fig. 1, the schematic structure of the engine will now be described.

As shown in Fig. 1, the cylinder block 11 of the engine 10 has six cylinders 11a, which are lined up in a row. A common rail 12 is arranged in the vicinity of the cylinder block 11 and extends in a direction in which the cylinders 11a are lined up. Diesel fuel, which is fuel, is pressurized and accumulated in the common rail 12. The common rail 12 is connected to six fuel injectors 13. Each fuel injector 13 sprays diesel fuel toward the corresponding cylinder 11a.

The cylinder block 11 is connected to a first end of an intake manifold 14 that supplies intake air to the cylinders 11a. The second end of the intake manifold 14, which is opposite to the cylinder block 11, is connected to a first end of an intake pipe 15, through which the intake air flows. An intercooler 16 and a compressor 17a are arranged in the intake pipe 15 in this order from a portion of the intake pipe 15 that is closer to the cylinder block 11, i.e., from the downstream side in the flow of the intake air. The compressor 17a constitutes a turbocharger 17. The intake manifold 14, the intake pipe 15, the intercooler 16, and the compressor 17a constitute an intake passage, and the intake air flows toward the cylinder block 11 from the second end of the intake pipe 15 that is opposite to the intake manifold 14.

A portion of the cylinder block 11 that faces the intake manifold 14 is connected to a first end of an exhaust manifold 18. The second end of the exhaust manifold 18 that is opposite to the cylinder block 11 is connected to a first end of an exhaust pipe 19, through which exhaust gas discharged from the cylinder block 11 flows. The exhaust manifold 18 and the exhaust pipe 19 are connected to each other by being connected to a turbine 17b, which constitutes the turbocharger 17.

An exhaust purification device 20 is installed in the engine 10 and purifies exhaust gas by decreasing nitrogen oxides (hereinafter, NOₓ) contained in the exhaust gas. The exhaust purification device 20 includes a filter 21, a reduction catalyst 22, a filter adding valve 23, a catalyst adding valve 24, a fuel tank 25, and a fuel adding pump 26.

In the exhaust purification device 20, the filter 21 and the reduction catalyst 22 are arranged in the exhaust pipe 19. The filter 21 is arranged upstream of the reduction catalyst 22 in a flow direction, which is a direction in which exhaust gas flows. The filter 21 and the reduction catalyst 22 are arranged in different housings, which are formed tubular. The exhaust manifold 18, the exhaust pipe 19, the housing of the filter 21, and the housing of the reduction catalyst 22 constitute an exhaust passage. The exhaust gas flows from the exhaust manifold 18 toward the second end of the exhaust pipe 19 that is opposite to the exhaust manifold 18.

The filter 21 purifies exhaust gas by capturing soot, hydrocarbons, soluble organic fraction (SOF), and the like, which are examples of particulates contained in the exhaust gas. The reduction catalyst 22 decreases NOₓ contained in the exhaust gas by reducing NOₓ contained in the exhaust gas.

The filter 21 includes an oxidation catalyst, and the oxidation catalyst promotes combustion of fuel contained in the exhaust gas. In a regeneration process of the filter 21, i.e., a process in which soot captured by the filter 21 is combusted, the filter adding valve 23 sprays fuel toward the exhaust gas, and the oxidation catalyst promotes combustion of the sprayed fuel. This increases the temperature of the filter 21 to, e.g., 600 °C, so that the soot captured by the filter 21 is combusted. At this time, the temperature of the exhaust gas that has flowed through the filter 21 is also increased. Thus, the exhaust gas at an increased temperature is supplied to the reduction catalyst 22. The filter 21 is an example of a heating portion. The filter 21 captures particulates contained in the exhaust gas so that the reduction catalyst 22 is unlikely to adsorb particulates. As a result, deterioration of the function of the reduction catalyst 22 that would be caused by adsorbing particulates is unlikely to occur. In addition, the oxidation catalyst included in the filter 21 also has a function of reducing NOₓ contained in the exhaust gas.

The filter adding valve 23 is arranged upstream of the filter 21 in the flow direction and sprays diesel fuel toward the exhaust gas flowing through the exhaust pipe 19. The catalyst adding valve 24 is arranged between the filter 21 and the reduction catalyst 22 in the flow direction and sprays diesel fuel toward the exhaust gas flowing through the exhaust pipe 19.

The fuel tank 25 retains diesel fuel to be sprayed by the filter adding valve 23 and the catalyst adding valve 24. The fuel tank 25 may be a fuel tank that is connected to the common rail 12 or a fuel tank other than the fuel tank that is connected to the common rail 12. The fuel tank 25 is connected to a fuel supply pipe 25a. A portion of the fuel supply pipe 25a that extends from the fuel tank 25 to the adding valves branches into a filter pipe 25a1, which is connected to the filter adding valve 23, and a catalyst pipe 25a2, which is connected to the catalyst adding valve 24.

The fuel adding pump 26 is connected to a portion of the fuel supply pipe 25a that is closer to the fuel tank 25 than the location at which two pipes are branched. The fuel adding pump 26 supplies diesel fuel in the fuel tank 25 toward the filter adding valve 23 and the catalyst adding valve 24 with a predetermined supply pressure. The fuel adding pump 26 is an electrically powered pump, for example.

A filter valve 25b is attached to the filter pipe 25a1 and opens and closes a first fuel passage that is formed by the filter pipe 25a1. A catalyst valve 25c is attached to the catalyst pipe 25a2 and opens and closes a second fuel passage that is formed by the catalyst pipe 25a2.

The first fuel passage is opened while the filter valve 25b opens, and the first fuel passage is closed while the filter valve 25b is closed. The second fuel passage is opened while the catalyst valve 25c opens, and the second fuel passage is closed while the catalyst valve 25c is closed.

The exhaust purification device 20 regenerates the filter 21, e.g., when the amount of soot captured by the filter 21 becomes a predetermined amount or more. When the filter 21 is regenerated, the exhaust purification device 20 opens the filter valve 25b and drives the fuel adding pump 26 to spray a predetermined amount of fuel toward exhaust gas from the filter adding valve 23. As a result, the temperature of exhaust gas is increased so that the soot captured by the filter 21 is combusted. In addition, in the regeneration process of the filter 21, the oxidation catalyst can promote combustion of fuel sprayed by the filter adding valve 23 toward the exhaust gas, and the filter 21 can promote reduction of NOₓ.

The exhaust purification device 20 reduces NOₓ with the reduction catalyst 22, e.g., when the temperature of the reduction catalyst is within a predetermined range. When reducing NOₓ, the exhaust purification device 20 opens the catalyst valve 25c and drives the fuel adding pump 26 to spray a predetermined amount of fuel from the catalyst adding valve 24 toward exhaust gas. As a result, the reduction catalyst 22 promotes reduction reaction of NOₓ with hydrocarbons contained in the exhaust gas. The exhaust purification device 20 may perform the regeneration of the filter 21 and the reduction of NOₓ separately or simultaneously.

### [Structure of Reduction Catalyst]

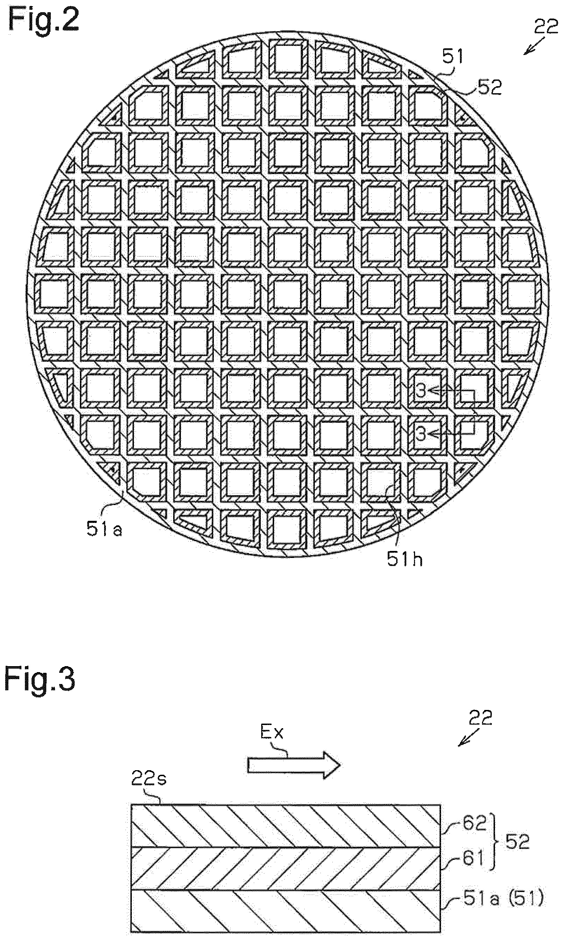

With reference to Figs. 2 and 3, the structure of the reduction catalyst 22 will now be described. Fig. 2 shows a cross-sectional structure of the reduction catalyst 22 taken along a plane that is orthogonal to the flow direction. For convenience of illustration, of the cross-sectional structure of the reduction catalyst 22 taken along line 3-3 of Fig. 2, Fig. 3 shows the cross-sectional structure of a cell wall and a multi-layered catalyst 52, which are layered on one plane of the cell wall that extends in the flow direction.

As shown in Fig. 2, the reduction catalyst 22 includes a monolithic support 51 having a cylindrical shape. The monolithic support 51 has a cell wall 51a that includes wall portions extending in the flow direction. The cross section of the cell wall 51a in a direction that is orthogonal to the flow direction has a square shape. The monolithic support 51 has cells 51h that are partitioned by the cell wall 51a. Each cell 51h is an opening extending in the flow direction, and the cross section of each cell 51h in a direction that is orthogonal to the flow direction is substantially rectangular.

The material for forming the monolithic support 51 is ceramic or metal. When ceramic is the material for forming the monolithic support 51, e.g., any of cordierite, silica, silicon carbide, silicon nitride, mullite, zircon, alumina, aluminum titanate, and the like is used as the forming material. When metal is the material for forming the monolithic support 51, e.g., any of iron, titanium, stainless steel, another alloy that primarily consists of iron, and the like is used as the forming material.

The cell wall 51a is provided with a multi-layered catalyst 52 on a wall portion that constitutes the inner circumferential surface of each cell 51h. The multi-layered catalyst 52 contacts exhaust gas that flows in the cell 51h.

As shown in Fig. 3, the multi-layered catalyst 52 has a catalyst layer 61 that covers the cell wall 51a of the monolithic support 51 and an adsorption layer 62 that covers the catalyst layer 61. The adsorption layer 62 forms a surface 22s that contacts exhaust gas Ex in the reduction catalyst 22 by covering the catalyst layer 61.

The catalyst layer 61 is a catalyst that promotes reduction reaction of NOₓ with hydrocarbons. The catalyst layer 61 includes silver and a catalyst support that supports the silver. The catalyst layer 61 also includes metal oxides that include at least aluminum in the crystal lattice as the catalyst support. The catalyst support is one of alumina and zeolites. Preferably, the catalyst layer 61 includes silver alumina or silver zeolites. When the catalyst layer 61 includes silver alumina, the catalyst layer 61 is constituted by coating the monolithic support 51 with, e.g., particles of at least one of γ-alumina that supports silver and 0-alumina that supports silver.

When the catalyst layer 61 includes silver zeolites, the catalyst layer 61 includes, e.g., particles of zeolites in which cations included in the zeolites are replaced by silver ions.

Hydrocarbons in diesel fuel, which are used as a reduction agent of NOₓ in the catalyst layer 61, includes hydrocarbons added to exhaust gas by at least one of the filter adding valve 23 and the catalyst adding valve 24 in addition to hydrocarbons contained in exhaust gas. The hydrocarbons mainly include alkane (saturated hydrocarbons) of which the carbon number is from 10 to 20 and include straight-chain alkane and branched-chain alkane.

The catalyst layer 61 promotes reduction reaction of NOₓ with NOₓ, hydrocarbons, and oxygen. With this, the catalyst layer 61 decreases NOₓ contained in exhaust gas by reducing NOₓ contained in the exhaust gas to nitrogen and ammonia (hereinafter, NH₃). In other words, the amount of NOₓ contained in the exhaust gas that exits from the reduction catalyst 22 is less than the amount of NOₓ contained in the exhaust gas that enters the reduction catalyst 22.

The adsorption layer 62 adsorbs NH₃ that is produced in the catalyst layer 61. While promoting reduction reaction of NOₓ with adsorbed NH₃, the adsorption layer 62 has a property of causing sulfur oxides contained in exhaust gas to contact the adsorbed ammonia. The adsorption layer 62 includes solid acid metal oxide, which is metal oxide having acidity. The adsorption layer 62 is constituted by coating the catalyst layer 61 and the monolithic support 51 with particles of the solid acid metal oxide.

The solid acid metal oxide has at least one of a Brønsted acid point, which is an acid point to donate a proton (hereinafter H⁺), and a Lewis acid point, which is an acid point to accept an electron pair.

The solid acid metal oxide, which constitutes the adsorption layer 62, has greater acid quantity, which is the amount of acid points, than the forming material of particles that constitutes the catalyst layer 61. This increases the probability at which NH₃ produced in the catalyst layer 61 is adsorbed by acid points of the adsorption layer 62. Thus, NH₃ produced in the catalyst layer 61 is more adsorbed by acid points of the adsorption layer 62.

The solid acid metal oxide of the adsorption layer 62 includes at least one of metal oxide, composite metal oxide, zeolites, and silicoaluminophosphate (hereinafter, SAPO). As metal oxide, e.g., alumina is preferable. As composite metal oxide, e.g., any one of silica-alumina, silica-titania, and silica-magnesia is preferable. In other words, preferably, solid metal oxide is at least one selected from a group that consists of alumina, silica-alumina, silica-titania, silica-magnesia, zeolites, and SAPO.

Zeolites are crystalline aluminosilicate represented by the following general formula A.

(M¹, M²_{1/2})ₘ(AlₘSiₙO₂₍ₘ₊ₙ₎)·ₓH₂O ... (A)

M¹ is, e.g., Li⁺, Na⁺, K⁺, or the like. M² is, e.g., Ca²⁺, Mg²⁺, Ba²⁺, or the like. Zeolites are preferably, e.g., ones having chabazite structure, and chabazite is preferable.

SAPO is a crystalline substance in which a part of aluminum and phosphate included in aluminum phosphate (AlPO₄) is replaced by silicon. SAPO may have zeolite-type crystal structure, or may have crystal structure that does not exist in zeolites.

Silica-alumina, zeolites, and SAPO are metal oxides that include silicon and aluminum in a crystal lattice. In those metal oxides, the silica-alumina ratio has correlation with heat resistance, which is a property of a crystal, and adsorptivity of NH₃. The silica-alumina ratio is the ratio of silicon to aluminum included in a crystal lattice, i.e., Si/AI. In metal oxide including silicon and aluminum, the higher the silica-alumina ratio, the higher the heat resistance becomes. On the other hand, the lower the silica-alumina ratio, the higher the adsorptivity becomes. Thus, the silica-alumina ratio is preferably set to a value that gives heat resistance with which the metal oxide is maintained stable in exhaust gas and a value that gives the highest adsorptivity of NH₃.

Alumina is preferably γ-alumina, which has a high specific surface area. In alumina, to neutralize the negative electric charge of aluminum in a crystal lattice, a part of oxygen atoms that form a crystal lattice forms a hydroxyl group. Alumina includes atoms with positive or negative electric charge due to discontinuous bond. The hydroxyl group of alumina and an atom having electric charge function as an acid point, so that NH₃ is adsorbed by the adsorption layer 62.

In metal oxide, similar to alumina, a hydroxyl group and an atom having electric charge function as an acid point, so that NH₃ is adsorbed by the adsorption layer 62.

In zeolites and SAPO, similar to alumina, a hydroxyl group and an atom having electric charge function as an acid point, so that NH₃ is adsorbed by the adsorption layer 62.

Solid metal oxide is a porous material. Preferably, the pore diameters, which are the diameters of pores that the solid metal oxide has, are greater than the molecular size of NH₃ and are less than the molecular size of hydrocarbons contained in diesel fuel. The pore diameters of the solid metal oxide being greater than the molecular size of NH₃ indicates that the molecules of NH₃ can move into the pores of the solid metal oxide. The pore diameters of the solid metal oxide being less than the molecular size of hydrocarbons indicate that the molecules of hydrocarbons cannot move into the pores of the solid metal oxide.

Accordingly, while NH₃ moves into the pores of the solid metal oxide, hydrocarbons do not move into the pores of the solid metal oxide. Thus, while NH₃ is adsorbed by the solid metal oxide, hydrocarbons go through the interspace formed between particles of the solid metal oxide and reach the catalyst layer 61. Thus, NH₃ is adsorbed by the adsorption layer 62, and hydrocarbons reach the catalyst layer 61 through the interspace formed in the adsorption layer 62 so that decrease in adsorption of NH₃ by the adsorption layer 62 is minimized. In addition, hydrocarbons reach the catalyst layer 61 so that reduction reaction of NOₓ with the hydrocarbons tends to occur.

The pore diameters of the solid metal oxide are preferably greater than or equal to 3 Å and less than or equal to 10 Å, and are preferably greater than or equal to 3 Å and less than or equal to 6 Å. Thus, the solid metal oxide is preferably SAPO-34, which has the chabazite structure, and SAPO-47, which has a structure similar to chabazite.

### [Operation of Exhaust Purification Device]

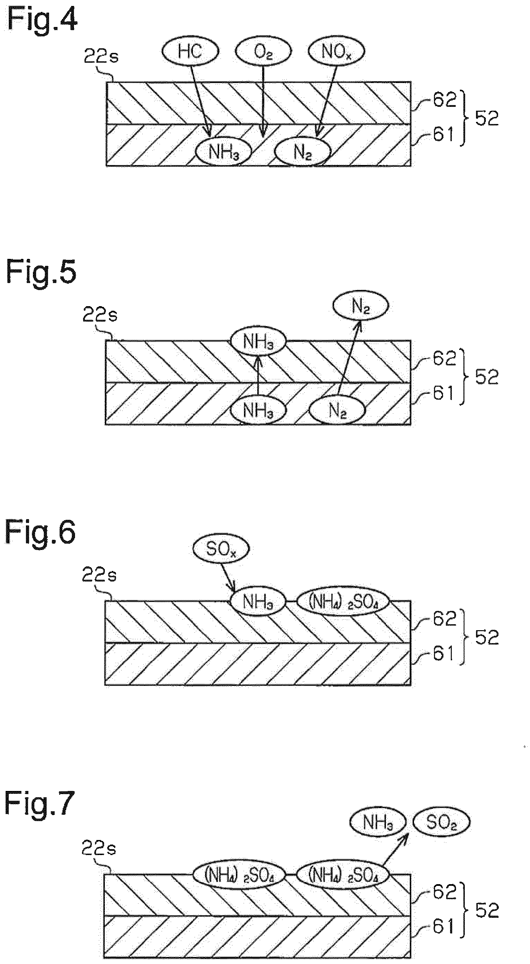

With reference to Figs. 4 to 7, operation of the exhaust purification device 20 will now be described. In Figs. 4 to 7, the monolithic support 51 on which the multi-layered catalyst 52 is formed is omitted from the illustration.

As shown in Fig. 4, e.g., when the catalyst adding valve 24 sprays diesel fuel toward exhaust gas, hydrocarbons (HC), NOₓ, and oxygen (O₂) contained in the exhaust gas reach the catalyst layer 61 through the adsorption layer 62. In other words, through the interspace of particles of the solid acid metal oxides, which constitute the adsorption layer 62, or the interspace of pores of the particles of the solid acid metal oxide, hydrocarbons, NOₓ, and oxygen reach the catalyst layer 61. In particular, the hydrocarbons reach the catalyst layer 61 through the interspace between particles of the solid acid metal oxide. With this, NOₓ is reduced in the catalyst layer 61 so that N₂ and NH₃ are produced.

As shown in Fig. 5, NH₃ produced in the catalyst layer 61 is adsorbed by the catalyst layer 61 with acid points of the adsorption layer 62. For example, when NH₃ is adsorbed by Bronsted acid points of the catalyst layer 61, a reaction indicated by the following reaction formula 1 occurs.

NH₃ + H⁺ → NH₄⁺ ... (1)

As shown in Fig. 6, when sulfur oxides (SOₓ) contained in exhaust gas, e.g., sulfur trioxide (SO₃), reach the adsorption layer 62, a reaction between sulfur trioxide and NH₃ adsorbed by the adsorption layer 62, i.e., a reaction indicated by the following reaction formula 2, occurs in the adsorption layer 62.

2NH₃ + SO₃ + H₂O → (NH₄)₂SO₄ ... (2)

In this way, the surface 22s of the reduction catalyst 22 is formed by the adsorption layer 62 that adsorbs NH₃. Thus, sulfur oxides contained in exhaust gas supplied to the reduction catalyst 22 first contact the adsorption layer 62. Next, sulfur oxides, e.g., sulfur trioxide, react with NH₃ to produce ammonium sulfate, which is a reaction product, so that the sulfur oxides are captured by the adsorption layer 62. This limits sulfur oxides supplied to the reduction catalyst 22 from reaching the catalyst layer 61 through the adsorption layer 62. The silver included in the catalyst layer 61 is then limited from reacting with sulfur oxides.

Furthermore, sulfur oxides contained in exhaust gas are stronger acid than NOₓ. Thus, while the adsorption layer 62 promotes a reaction of reducing NOₓ with NH₃, NH₃ adsorbed by the adsorption layer 62 reacts with sulfur oxides contained in exhaust gas. Thus, compared to a configuration in which the adsorption layer 62 promotes a reaction of reducing NOₓ with NH₃, the catalyst layer 61 less contacts sulfur oxides contained in exhaust gas. Meanwhile, the sulfur oxides include not only the aforementioned sulfur trioxide but also sulfur tetroxide (SO₄).

As shown in Fig. 7, when the filter adding valve 23 sprays diesel fuel toward exhaust gas, the temperature of the filter 21 is increased, and the temperature of exhaust gas supplied to the reduction catalyst 22 is increased to a predetermined temperature that is greater than or equal to the decomposition temperature of ammonium sulfate, e.g., greater than or equal to 400°C. With this, ammonium sulfate captured by the adsorption layer 62 thermally decomposes to produce NH₃, sulfur dioxide, nitrogen, and water.

Decomposition of ammonium sulfate allows the adsorption layer 62 to newly adsorb NH₃. Meanwhile, sulfur dioxide is produced as sulfur oxides produced by decomposition of ammonium sulfate. However, the reactivity of sulfur dioxide to silver is lower than the reactivity of sulfur trioxide and the like to silver. Thus, the compounds of sulfur dioxide and silver are less likely to be produced. In other words, the reactivity of sulfur oxides contained in exhaust gas to silver is greater than the reactivity of sulfur dioxide that occurs by decomposition of ammonium sulfate to silver. Thus, even if the thermal decomposition of ammonium sulfate produces sulfur dioxide, the compounds of silver containing sulfur are less likely to be produced.

As described above, the exhaust purification device according to one embodiment provides the following listed advantages.
(1) The adsorption layer 62, which covers the catalyst layer 61, forms the surface 22s of the reduction catalyst 22. Thus, sulfur oxides contained in exhaust gas react with ammonia adsorbed by the adsorption layer 62. With this, sulfur oxides are adsorbed by the adsorption layer 62. This limits contact of the sulfur oxides with the catalyst layer 61. As a result, the function of the catalyst layer 61 is less likely to be impaired. This limits decline of the decrease of the amount of NOₓ contained in exhaust gas.
(2) In pores with diameters smaller than the molecular size of hydrocarbons, ammonia enters into the pores and is adsorbed by the solid acid metal oxide. Thus, hydrocarbons do not disturb adsorption of ammonia. Because of this, in the solid acid metal oxides, which constitute the adsorption layer 62, the probability of adsorbing NH₃ is increased.
(3) Most of hydrocarbons pass through the interspace formed between particles included in the adsorption layer 62 and reaches the catalyst layer 61. Thus, the probability at which the adsorption layer 62 adsorbs NH₃ is increased, and hydrocarbons used for reduction of NOₓ are reliably supplied to the catalyst layer 61.
(4) The solid acid metal oxide is at least one selected from a group of alumina, silica-alumina, silica-titania, silica-magnesia, zeolites, and silicoaluminophosphate. Thus, NH₃ is adsorbed by acid points of the solid acid metal oxide. Meanwhile, the solid acid metal oxide is preferably chabazite of zeolites.
(5) The reaction product produced by the adsorption layer 62 thermally decomposes so that sulfur oxides that have lower reactivity to silver than sulfur oxide of exhaust gas has are produced and are discharged from the adsorption layer 62. This limits a reaction between the catalyst layer 61 and silver while the adsorption layer 62 reaches a state to allow sulfur oxides in exhaust gas to be adsorbed again.

The above illustrated embodiment may be modified in the following forms.

The filter 21 as an example of a heating portion is arranged upstream of the reduction catalyst 22 in the flow direction of exhaust gas. The heating portion may be, e.g., a burner or an oxidation catalyst installed in the exhaust purification device 20 other than the filter 21. Any configuration may be applicable as long as the heating portion can increase the temperature of exhaust gas upstream of the reduction catalyst 22 in the flow direction. Such a configuration can also provide an advantage similar to the above advantage (5).

Exhaust gas increases the temperature of the reduction catalyst 22 so that ammonium sulfide of the reduction catalyst 22 thermally decomposes considerably.

The solid acid metal oxide included in the adsorption layer 62 may be alumina, silica-alumina, silica-titania, silica-magnesia, zeolites, or solid acid metal oxides other than SAPO. Any material may be used as long as the material has at least one of a Bronsted acid site and a Lewis acid site and has an amount of acid sites greater than that of the catalyst layer 61.

It is not necessarily needed that all pores of the solid acid metal oxide included in the adsorption layer 62 have pore diameters greater than the molecular size of NH₃ and less than the molecular size of hydrocarbons. For example, at least some of the pores may have pore diameters greater than the molecular size of NH₃ and greater than the molecular size of hydrocarbons. Even such a configuration provides an advantage similar to the above advantage (3) at least in a part of the solid metal oxide, which constitutes the adsorption layer 62.

The pores of the solid acid metal oxide may have pore diameters less than or equal to the molecular size of NH₃. Even such a configuration provides an advantage similar to the above advantage (1) since at least acid points formed in the surface of particles of the solid acid metal oxide adsorb NH₃.

The pores of the solid acid metal oxide may have pore diameters greater than or equal to the molecular size of hydrocarbons. Even such a configuration provides an advantage similar to the above advantage (1) as long as the solid acid metal oxide has acid points.

The pores of the metal oxide which constitutes the catalyst layer 61 may have pore diameters less than or equal to the pore diameters of pores of the solid acid metal oxide which constitutes the adsorption layer 62. Even with such a configuration, at least silver ions that exist on the surface of the catalyst layer 61 promote a reaction of hydrocarbons reducing nitrogen oxides. Thus, in the catalyst layer 61, nitrogen oxides are reduced considerably.

Zeolites and SAPO may include alkali metal, e.g., proton substitute type zeolites and SAPO in which Na⁺ is replaced by H⁺. Even with such a configuration, proton substitute type zeolites and SAPO adsorb NH₃ with H⁺. Zeolites and SAPO may include cation substitute type zeolites and SAPO in which alkali metal is replaced by polyvalence cations. In this case, the cations are preferably polyvalence ions, which do not give a function of promoting a reduction reaction of NOₓ with NH₃ to the adsorption layer 62. In cation substitute zeolites and SAPO, a hydroxyl group is combined to a polyvalence cation to neutralize positive electric charge of the polyvalence cation in some cases. Even in such a configuration, a hydroxyl group functions as an acid point to donate H⁺ to NH₃. Thus, NH₃ is adsorbed by the adsorption layer 62.

Zeolites and SAPO may include proton-type zeolites and SAPO. In this case, the proton-type zeolites and SAPO are produced by being calcinated after a univalent cation in a pore, e.g., Na⁺, is replaced by NH₄⁺. Even with such a configuration, proton-type zeolites and SAPO have a hydroxyl group in which hydrogen is combined with a part of oxygen, which forms a crystal lattice, and functions as an acid point in which the hydroxyl group donates H⁺.

The monolithic support 51 included in the reduction catalyst 22 does not necessarily need to be cylindrical. For example, it may have a polygonal and tubular shape such as a cuboid. The cross section of each cell 51h does not necessarily need to be rectangular. For example, it may be, e.g., trapezoidal, square, sinusoidal, hexagonal, elliptical, and circular.

The reduction catalyst 22 does not necessarily need to be configured to include the monolithic support 51. It may be configured to include a pellet-shaped support or a plate-shaped support as a support. Even such a configuration provides an advantage similar to the above advantage (1) as long as the adsorption layer 62 included in the reduction catalyst 22 covers the catalyst layer 61 and forms a surface that contacts exhaust gas.

The exhaust purification device 20 includes the filter adding valve 23. Even in a configuration in which an exhaust purification device would not include a filter adding valve 23, e.g., in a condition in which fuel injected by the injector 13 flows to the exhaust pipe 19, as long as fuel is injected from the fuel injector 13 toward the cylinder 11a. With this, the regeneration process of the filter 21 is performed with fuel injected from the fuel injector 13.

The exhaust purification device 20 includes both, the filter adding valve 23 and the catalyst adding valve 24. Even in a configuration in which an exhaust purification device would not include both, the filter adding valve 23 and the catalyst adding valve 24, it may be used in a condition in which fuel injected from the fuel injector 13 flows to the exhaust pipe 19 as long as fuel is injected from the fuel injectors 13 toward the cylinders 11a. With this, the regeneration process of the filter 21 and reduction of NOₓ in the reduction catalyst 22 are performed with fuel injected from the fuel injector 13.

When the filter 21 is regenerated, the exhaust purification device 20 increases the temperature of the filter 21 by spraying fuel from the filter adding valve 23 to exhaust gas. Not limited to this, the exhaust purification device 20 may spray fuel from the filter adding valve 23 to exhaust gas for the purpose of increasing the temperature of the exhaust gas supplied to the reduction catalyst 22, for example, when the amount of sulfur oxides contained in the exhaust gas is estimated from the operation state of the engine 10 and the estimated amount of sulfur oxides is greater than a predetermined amount. With such a configuration, ammonium sulfate adsorbed by the adsorption layer 62 decomposes, and the adsorption layer 62 can adsorb new sulfur oxides. Thus, a reaction of silver with sulfur oxides is limited. Meanwhile, when the amount of sulfur oxides is greater than the predetermined amount, it is preferable that fuel is also spayed from the catalyst adding valve 24 at the same time in order to produce NH₃, which reacts with sulfur oxides.

The following are technical ideas that can be obtained from the above illustrated embodiments.
(1) The exhaust purification device according to claim 3, wherein each of the pores has a diameter greater than the molecular size of the ammonia and smaller than the molecular size of the hydrocarbons.
   According to such a configuration, most of the hydrocarbons passes through the interspace formed between particles included in the adsorption layer and reaches the catalyst layer. Thus, the adsorption layer more adsorbs ammonia, and hydrocarbons used for reduction of nitrogen oxides are reliably supplied to the catalyst layer.
(2) The exhaust purification device according to claim 1, wherein the heating portion is a filter that captures particulates in the exhaust gas.

According to such a configuration, the reduction catalyst contacts exhaust gas in which at least some of particulates are removed, e.g., by a filter. With this, the reduction catalyst adsorbs particulates less. Thus, deterioration of the function of the reduction catalyst caused by adsorbing particulates is unlikely to occur. Thus, decline of the decrease in the amount of nitrogen oxides contained in exhaust gas is limited.

## Claims

1. An exhaust purification device (20) comprising a reduction catalyst (22) that is located in a portion of an exhaust passage of a diesel engine and is configured to reduce nitrogen oxide contained in exhaust gas,
a heating portion (21) that is located upstream of the reduction catalyst (22) in a flowing direction of the exhaust gas and configured to heat the exhaust gas,
the heating portion (21) is a filter that captures particulates in the exhaust gas,
a catalyst adding valve (24) that is arranged between the filter and the reduction catalyst (22) in the flow direction and is configured to spray diesel fuel toward the exhaust gas, wherein
the reduction catalyst (22) includes a catalyst layer (61) and an adsorption layer (62), which covers the catalyst layer (61) and forms a surface (22s) of the reduction catalyst (22) that is configured to contact the exhaust gas,
the catalyst layer (61) includes silver and a catalyst support that supports the silver,
the catalyst support is one of alumina and zeolite,
the catalyst layer (61) is configured to promote a reduction reaction in which the nitrogen oxide reacts with hydrocarbon to produce ammonia,
the adsorption layer (62) includes solid acid metal oxide having acidity,
the solid acid metal oxide has at least one of a Bronsted acid site, which is an acid site to donate a proton, and a Lewis acid site, which is an acid site to accept an electron pair,
an amount of acid sites of the adsorption layer (62) is greater than an amount of acid sites of the catalyst layer (61),
the adsorption layer (62) is configured to adsorb ammonia produced in the catalyst layer (61),
the adsorption layer (62) has a property of causing sulfur oxide contained in the exhaust gas to contact the adsorbed ammonia thereby is configured to produce ammonium sulfate through a reaction of the adsorbed ammonia with sulfur trioxide or sulfur tetroxide contained in the exhaust gas,
the heating portion (21) is configured to increase the temperature of the exhaust gas to a predetermined temperature which is greater than or equal to a temperature at which the ammonium sulfate thermally decomposes, thereby is configured to produce sulfur dioxide that has less reactivity to the silver than the sulfur trioxide or the sulfur tetroxide has,
the exhaust purification device (20) is configured to spray fuel from a filter adding valve (23) to exhaust gas when the amount of sulfur oxides contained in the exhaust gas is estimated from the operation state of the engine (10) and the estimated amount of sulfur oxides is greater than a predetermined amount, and
the catalyst adding valve (24) is configured to also spray fuel at the same time.

2. The exhaust purification device (20) according to claim 1, wherein
the solid acid metal oxide is a porous material having a plurality of pores,
the adsorption layer (62) includes a plurality of particles formed of the solid acid metal oxide, and
at least some of the pores have diameters smaller than the molecular size of the hydrocarbon.

3. The exhaust purification device (20) according to claim 2, wherein each of the pores has a diameter greater than the molecular size of ammonia and smaller than the molecular size of the hydrocarbon.

4. The exhaust purification device (20) according to any one of claims 1 to 3, wherein the solid acid metal oxide is at least one selected from a group that consists of alumina, silica-alumina, silica-titania, silica-magnesia, zeolite, and silicoaluminophosphate.

5. The exhaust purification device (20) according to claim 4, wherein the solid acid metal oxide is chabazite.

## Patentansprüche

1. Abgasreinigungsvorrichtung (20), aufweisend einen Reduktionskatalysator (22), der in einem Bereich einer Abgasleitung eines Dieselmotors angeordnet ist und so konfiguriert ist, dass er ein in einem Abgas enthaltenes Stickoxid reduziert,
einen Aufwärmbereich (21), der stromaufwärts zum Reduktionskatalysator (22) in einer Strömungsrichtung des Abgases angeordnet ist und so konfiguriert ist, dass er das Abgas erwärmt,
wobei der Aufwärmbereich (21) ein Filter ist, der Partikel in dem Abgas einfängt,
ein Katalysatorzugabeventil (24), das zwischen dem Filter und dem Reduktionskatalysator (22) in der Strömungsrichtung angeordnet ist und so konfiguriert ist, dass es einen Dieselbrennstoff in Richtung auf das Abgas sprüht, wobei
der Reduktionskatalysator (22) eine Katalysatorschicht (61) und eine Adsorptionsschicht (62) beinhaltet, die die Katalysatorschicht (61) bedeckt und eine Oberfläche (22s) des Reduktionskatalysators (22) ausbildet, die so konfiguriert ist, dass sie das Abgas kontaktiert,
wobei die Katalysatorschicht (61) Silber und einen Katalysatorträger beinhaltet, der das Silber trägt,
wobei der Katalysatorträger aus Aluminiumoxid und Zeolith ist,
wobei die Katalysatorschicht (61) so konfiguriert ist, dass sie eine Reduktionsreaktion begünstigt, in der das Stickoxid mit einem Kohlenwasserstoff reagiert, um Ammoniak zu erzeugen,
wobei die Adsorptionsschicht (62) ein Festsäuremetalloxid beinhaltet, das eine Azidität aufweist,
wobei das Festsäuremetalloxid zumindest ein Brönsted-Säurezentrum, das ein Säurezentrum ist, das ein Proton abgeben soll, und/oder ein Lewis-Säurezentrum aufweist, das ein Säurezentrum ist, das ein Elektronenpaar aufnehmen soll,
wobei eine Menge von Säurezentren der Adsorptionsschicht (62) größer ist als eine Menge von Säurezentren der Katalysatorschicht (61),
wobei die Adsorptionsschicht (62) so konfiguriert ist, dass sie das in der Katalysatorschicht (61) erzeugte Ammoniak adsorbiert,
wobei die Adsorptionsschicht (62) eine Eigenschaft aufweist zum Bewirken, dass ein in dem Abgas enthaltenes Schwefeloxid das adsorbierte Ammoniak kontaktiert und dadurch so konfiguriert ist, dass sie ein Ammoniaksulfat durch eine Reaktion des adsorbierten Ammoniaks mit einem in dem Abgas enthaltenen Schwefeltrioxid oder Schwefeltetraoxid erzeugt,
wobei der Aufwärmbereich (21) so konfiguriert ist, dass er die Temperatur des Abgases auf eine vorbestimmte Temperatur erhöht, die größer oder gleich einer Temperatur ist, bei der das Ammoniaksulfat thermisch zersetzt wird, und dadurch so konfiguriert ist, dass er ein Schwefeldioxid erzeugt, das in Bezug auf das Silber eine geringere Reaktivität aufweist als das Schwefeltrioxid oder das Schwefeltetraoxid,
wobei die Abgasreinigungsvorrichtung (20) so konfiguriert ist, dass sie den Brennstoff von einem Filterzugabeventil (23) auf das Abgas sprüht, wenn die Menge der in dem Abgas enthaltenen Schwefeloxide anhand des Betriebszustands der Maschine (10) geschätzt wird und die geschätzte Menge der Schwefeloxide größer als eine vorbestimmte Menge ist, und
das Katalysatorzugabeventil (24) so konfiguriert ist, dass es gleichzeitig Brennstoff versprüht.

2. Abgasreinigungsvorrichtung (20) nach Anspruch 1, wobei
das Festsäuremetalloxid ein poröses Material mit einer Mehrzahl von Poren ist,
die Adsorptionsschicht (62) eine Mehrzahl von Partikeln beinhaltet, die aus dem Festsäuremetalloxid gebildet sind, und
zumindest einige der Poren Durchmesser aufweisen, die kleiner sind als die Molekulargröße des Kohlenwasserstoffs.

3. Abgasreinigungsvorrichtung (20) nach Anspruch 2, wobei jede von den Poren einen Durchmesser aufweist, der größer ist als die Molekulargröße von Ammoniak und kleiner als die Molekulargröße des Kohlenwasserstoffs.

4. Abgasreinigungsvorrichtung (20) nach einem der Ansprüche 1 bis 3, wobei das Festsäuremetalloxid aus der Gruppe bestehend aus Aluminiumoxid, Siliciumdioxid-Aluminiumoxid, Siliciumdioxid-Titandioxid, Siliciumdioxid-Magensiumoxid, Zeolith und Siliciumaluminiumphosphat ausgewählt ist.

5. Abgasreinigungsvorrichtung (20) nach Anspruch 4, wobei das Festsäuremetalloxid Chabasit ist.

## Revendications

1. Dispositif de purification d'échappement (20) comprenant un catalyseur de réduction (22) qui est situé dans une partie d'un passage d'échappement d'un moteur diesel et qui est configuré pour réduire un oxyde d'azote contenu dans un gaz d'échappement,
une partie chauffante (21) qui est située en amont du catalyseur de réduction (22) dans une direction d'écoulement du gaz d'échappement et configurée pour chauffer le gaz d'échappement,
la partie chauffante (21) est un filtre qui capture les particules dans le gaz d'échappement,
une vanne d'ajout de catalyseur (24) qui est agencée entre le filtre et le catalyseur de réduction (22) dans la direction d'écoulement et qui est configurée pour pulvériser un carburant diesel vers le gaz d'échappement, dans lequel
le catalyseur de réduction (22) inclut une couche catalytique (61) et une couche d'adsorption (62), qui recouvre la couche catalytique (61) et forme une surface (22s) du catalyseur de réduction (22) qui est configurée pour entrer en contact avec le gaz d'échappement,
la couche catalytique (61) inclut de l'argent et un support de catalyseur qui supporte l'argent,
le support de catalyseur est l'un parmi une alumine et une zéolithe,
la couche catalytique (61) est configurée pour favoriser une réaction de réduction dans laquelle l'oxyde d'azote réagit avec un hydrocarbure pour produire de l'ammoniac,
la couche d'adsorption (62) inclut un oxyde métallique acide solide ayant une acidité,
l'oxyde métallique acide solide possède au moins l'un parmi un site acide de Brønsted, qui est un site acide pour donner un proton, et un site acide de Lewis, qui est un site acide pour accepter une paire d'électrons,
une quantité de sites acides de la couche d'adsorption (62) est supérieure à une quantité de sites acides de la couche catalytique (61),
la couche d'adsorption (62) est configurée pour adsorber l'ammoniac produit dans la couche catalytique (61),
la couche d'adsorption (62) a une propriété d'amener un oxyde de soufre contenu dans le gaz d'échappement à entrer en contact avec l'ammoniac adsorbé donc est configurée pour produire du sulfate d'ammonium par une réaction de l'ammoniac adsorbé avec le trioxyde de soufre ou le tétroxyde de soufre contenu dans le gaz d'échappement,
la partie chauffante (21) est configurée pour augmenter la température du gaz d'échappement jusqu'à une température prédéterminée qui est supérieure ou égale à une température à laquelle le sulfate d'ammonium se décompose thermiquement, donc est configurée pour produire du dioxyde de soufre qui est moins réactif avec l'argent que le trioxyde de soufre ou le tétroxyde de soufre,
le dispositif de purification d'échappement (20) est configuré pour pulvériser un carburant à partir d'une vanne d'ajout de filtre (23) vers un gaz d'échappement quand la quantité d'oxydes de soufre contenue dans le gaz d'échappement est estimée à partir d'un état de fonctionnement du moteur (10) et que la quantité estimée d'oxydes de soufre est supérieure à une quantité prédéterminée, et
la vanne d'ajout de catalyseur (24) est configurée pour pulvériser également un carburant en même temps.

2. Dispositif de purification d'échappement (20) selon la revendication 1, dans lequel
l'oxyde métallique acide solide est un matériau poreux ayant une pluralité de pores,
la couche d'adsorption (62) inclut une pluralité de particules formées de l'oxyde métallique acide solide, et
au moins certains des pores ont des diamètres inférieurs à la taille moléculaire de l'hydrocarbure.

3. Dispositif de purification d'échappement (20) selon la revendication 2, dans lequel chacun des pores a un diamètre supérieur à la taille moléculaire de l'ammoniac et inférieur à la taille moléculaire de l'hydrocarbure.

4. Dispositif de purification d'échappement (20) selon l'une quelconque des revendications 1 à 3, dans lequel l'oxyde métallique acide solide est au moins l'un sélectionné dans un groupe qui consiste en une alumine, une silice-alumine, une silice-oxyde de titane, une silice-magnésie, une zéolithe, et un silicoaluminophosphate.

5. Dispositif de purification d'échappement (20) selon la revendication 4, dans lequel l'oxyde métallique acide solide est une chabazite.
